# FASCICULE DE BREVET EUROPEEN

(11) **EP 3 957 581 B1**
(45) Date de publication et mention de la délivrance du brevet: **02.07.2025**
(21) Numéro de dépôt: 21190593.0
(22) Date de dépôt: 10.08.2021
(51) Int. Cl.: B65G 23/16, D01B 1/36, F16G 5/10, F16G 13/07

(54) **COURROIE DE TEILLEUSE POUR L'ENTRAINEMENT DE TIGES VÉGÉTALES**
RIEMEN EINER BRECH- UND SCHWINGMASCHINE FÜR DEN VORSCHUB VON PFLANZENSTÄNGELN
BELT FOR TILLER FOR CARRYING PLANT STALKS

(30) Priorité: 21.08.2020 FR 2008607
(43) Date de publication de la demande: 23.02.2022
(73) Titulaire: N.V. Depoortere, 8791 Beveren-Leie (BE)
(72) Inventeur: CLAERBOUT, Valentin, 8500 Kortrijk (BE); DEPOORTERE, Rik, 8780 Oostrozebeke (BE)
(74) Mandataire: Cabinet Beau de Loménie

(56) Documents cités:
- DE-C- 560 837
- US-A- 1 589 732

## Description

### Domaine technique

L'invention concerne le domaine du teillage de tiges végétales, telles le lin ou le chanvre. Le teillage consiste essentiellement à broyer les tiges puis à les battre afin de séparer les fibres du bois. A l'issue du processus de teillage, on obtient une nappe de filasse. Pour réaliser l'opération de teillage, on utilise communément une machine dénommée teilleuse qui s'étend selon une direction longitudinale.

### Technique antérieure

Une teilleuse comprend généralement un dispositif d'entrainement pour transporter les tiges végétales selon la direction longitudinale de la teilleuse au travers des différents modules de la machine de teillage, notamment le module de broyage puis les modules de battage qui sont munis de turbines destinées à battre les tiges afin de retirer les anas.

Le dispositif d'entrainement comporte traditionnellement une chaîne de maillons métalliques qui présentent la forme d'un « U ». Un exemple est illustré dans le document US1589732. Ces maillons sont fixés à une sangle plate refermée sur elle-même et qui est montée sur des rouleaux d'entrainement. Les maillons sont fixés sur la face extérieure de la sangle, c'est-à-dire la face qui ne vient pas au contact des rouleaux d'entrainement. Le dispositif d'entrainement comporte en outre une courroie qui est agencée pour venir se loger entre les ailes des maillons. Cette courroie est généralement en caoutchouc. Elle présente une direction longitudinale, une épaisseur définie entre une face intérieure et une face extérieure de la courroie, et une largeur définie entre des premier et second flancs de la courroie. Les faces extérieure et intérieure sont définies en référence à l'ovale formé par la courroie. La courroie est agencée pour venir s'engager, de façon amovible, dans les maillons de sorte que les premier et second flancs de la courroie viennent en appui contre les ailes des maillons. Lorsque la courroie est engagée avec la chaine, on comprend que le déplacement de la chaine a pour effet de déplacer la courroie.

La courroie présente traditionnellement un brin dont la longueur est supérieure au brin de la sangle, de sorte que la courroie n'est engagée dans des maillons du dispositif d'entrainement et pince les tiges végétales que sur une partie de la longueur du brin de la courroie. La chaîne et la courroie forment chacune un ovale avec un brin retour vers le haut pour la chaîne et vers le bas pour la courroie.

Les tiges végétales sont amenées sous forme de nappe en amont du dispositif d'entrainement, c'est-à-dire juste avant l'engagement de la courroie dans les maillons. Les tiges végétales, orientées perpendiculairement au sens de déplacement de la courroie, sont alors saisies entre la courroie et les maillons du dispositif d'entrainement, puis déplacées selon la direction longitudinale de la courroie - grâce à l'engagement de la courroie dans la chaîne - afin d'être transportées dans les différents modules de la teilleuse.

On comprend que la nappe végétale se sépare du dispositif d'entrainement, en aval, au moment où la courroie se désengage des maillons.

L'engagement et le désengagement successifs de la courroie dans les maillons a pour effet d'user les pièces constitutives du dispositif d'entrainement. Pour assurer un maintien correct des tiges dans le dispositif d'entrainement, la largeur de la courroie doit être sensiblement égale à la distance entre les ailes des maillons, de façon à assurer un jeu serré. Cependant, un tel jeu serré entre la courroie - généralement en caoutchouc - et les maillons - généralement en métal - a pour effet de rendre difficile l'engagement et le désengagement de la courroie et des tiges végétales dans les maillons, ce qui a pour effet d'user la courroie et les ailes des maillons. Une telle usure peut avoir pour effet d'augmenter le jeu entre la courroie et les ailes des maillons, en conséquence de quoi les tiges végétales ne sont plus suffisamment pincées et risquent d'être emportées par les battoirs qui exercent une traction très forte sur les tiges.

Un autre inconvénient des dispositifs d'entrainement connus est qu'une surépaisseur locale de la nappe de tige, peut créer une zone de moindre pincement de part et d'autre de la surépaisseur, avec le risque décrit ci-dessus.

### Exposé de l'invention

Un but de la présente invention est de proposer une courroie qui remédie aux inconvénients précités.

L'invention atteint son but par une courroie selon la revendication 1, dans laquelle la courroie a une portion centrale ainsi qu'au moins une première portion latérale reliée à la portion centrale, et ladite première portion latérale est élastiquement mobile par rapport à la portion centrale dans le sens de la largeur de la courroie de façon à faciliter l'engagement de la courroie dans les maillons.

Grâce à l'invention, la largeur de la courroie diminue lorsqu'on la comprime transversalement. La courroie tend à reprendre sa forme initiale lorsque la compression cesse au moment du désengagement. Grâce à ce comportement mécanique, le flanc de la première portion latérale se rapproche de la portion centrale lors de l'engagement de la courroie dans les maillons de façon à faciliter l'insertion de la courroie dans les maillons, le flanc de la courroie restant en appui contre l'aile du maillon. Un tel agencement permet aussi d'assurer le maintien des tiges végétales grâce au pincement des tiges entre la courroie et les maillons, malgré une usure des ailes ou de la courroie.

L'élasticité transversale de la courroie permet également de tolérer des surépaisseurs locales de la nappe de tiges et éviter ainsi la perte de tiges végétales lors du battage.

On comprend que la largeur de la courroie au repos, c'est-à-dire lorsque la courroie n'est pas engagée dans la chaîne, est au moins égale à la distance entre les ailes des maillons. Lorsque la courroie est comprimée transversalement, sa largeur devient légèrement inférieure ou sensiblement égale à la distance entre les deux ailes des maillons.

Avantageusement, la courroie présente au moins une portion élastique entre la première portion latérale et la portion centrale. Cette portion élastique peut être constituée par la liaison entre la portion centrale et la première portion latérale.

De préférence, la courroie comprend un matériau élastique, tel que par exemple du caoutchouc. La portion élastique précitée est préférentielle en caoutchouc.

Selon l'invention, la courroie comprend au moins une première cavité longitudinale s'étendant selon la longueur de la courroie tout en étant ménagée entre la première portion latérale et la portion centrale.

La présence de la première cavité permet de déplacer et/ou déformer la première portion latérale par rapport à la portion centrale sous l'effet d'un effort de compression transversale, de façon à réduire au moins localement la largeur de la courroie. De préférence, la première cavité est vide. Elle pourrait aussi comprendre un matériau plus souple que le matériau constitutif de la portion centrale.

Sans sortir du cadre de la présente invention, la courroie pourrait comporter une pluralité de premières cavités, parallèles et distantes les unes des autres, situées entre la portion centrale et la première portion latérale.

Selon l'invention, considérée selon une section transversale de la courroie, la première cavité longitudinale présente une section transversale de forme oblongue dont la largeur s'étend selon la largeur de la courroie.

La longueur de la section transversale de la première cavité de forme oblongue s'étend selon la hauteur de la courroie.

Aussi, la première portion latérale est reliée à la portion centrale par deux brins dont la hauteur est inférieure à la longueur de la section transversale de la première cavité.

De préférence, la première cavité s'étend sensiblement sur toute la longueur de la courroie.

Encore de préférence, la longueur de la section transversale de la première cavité est supérieure à la moitié de la hauteur de la courroie, de préférence supérieure aux deux tiers de la hauteur de la courroie.

De préférence, la première cavité s'étend de part et d'autre d'un plan perpendiculaire aux premier et second flancs et situé à la mi-hauteur de la courroie.

Avantageusement, la courroie selon l'invention comprend en outre une seconde portion latérale reliée à la portion centrale ainsi qu'une seconde cavité longitudinale, parallèle à la première cavité longitudinale, ladite seconde cavité longitudinale étant ménagée entre la seconde portion latérale et la portion centrale et s'étendant selon la longueur de la courroie.

Les première et seconde cavités longitudinales sont de préférence parallèles. Encore de préférence, les première et seconde cavités longitudinales sont symétriques l'une par rapport à l'autre. Un intérêt est d'éviter les erreurs de montage la courroie lors du collage.

Avantageusement, pour renforcer la tenue mécanique de la courroie, la portion centrale comporte en outre une armature longitudinale, de préférence en métal. De préférence, l'armature longitudinale est une bande plate, de préférence métallique, dont les faces sont parallèles aux faces intérieure et extérieure. L'armature longitudinale forme une boucle qui est refermée sur elle-même grâce à un moyen d'accroche, par exemple par agrafage. On pourra également prévoir un manchon de connexion pour fixer ensemble les extrémités de la courroie et les extrémités de l'armature longitudinale.

De préférence, la première cavité s'étend de part et d'autre d'un plan passant par la bande plate constituant l'armature.

Encore de préférence, les première et seconde cavités sont disposées de part et d'autre de l'armature. Grâce à cette conformation, l'armature longitudinale ne gêne pas la compression transversale de la courroie. Les longueurs des sections transversales des première et seconde cavités sont préférentiellement sensiblement perpendiculaires à l'armature en forme de bande plate.

La première cavité est située entre le premier flanc et l'armature, tandis que la seconde cavité est située entre le second flanc et l'armature.

La face intérieure de la courroie est destinée à venir en appui sur un rail de la teilleuse sur lequel glisse la courroie. Selon un mode de réalisation préférentiel, la face intérieure de la courroie est munie de rainures longitudinales. Ces rainures longitudinales sont préférentiellement parallèles. Les rainures viennent donc en contact avec le rail de la teilleuse. Elles permettent donc de diminuer le frottement entre la courroie et le rail de guidage de la teilleuse, par rapport aux courroies traditionnelles où la face intérieure de la courroie est plane.

L'invention porte en outre sur un dispositif d'entrainement de tiges végétales pour teilleuse comportant une chaîne qui comprend :
des maillons en forme de U comportant chacun un logement défini entre une base et deux ailes parallèles du maillon ; et
une sangle d'entrainement à laquelle sont fixés les maillons ; le dispositif d'entrainement comportant en outre :
   une courroie selon l'invention, la courroie étant reçue de façon amovible dans les logements des maillons de sorte que les premier et second flancs de la courroie viennent en appui contre les ailes des maillons.

On comprend que la base et les deux ailes parallèles du maillon ont une forme en « U ».

La courroie peut être localement engagée et désengagée des maillons. L'engagement se fait dans un point en amont, tandis que le désengagement est effectué dans un point en aval.

Les bases des maillons sont fixées à la sangle d'entrainement, par exemple par rivetage. De préférence, les maillons sont juxtaposés. Les maillons sont engagés les uns dans les autres afin de former un logement en « U » continu sur toute la longueur de la chaîne.

De préférence, la base des maillons est légèrement plus large que la largeur des maillons au niveau du sommet des ailes.

La sangle d'entrainement est préférentiellement plate. Elle est également de préférence réalisée en caoutchouc. Elle peut aussi comporter une armure ou trame de renforcement. La sangle d'entrainement est destinée à coopérer avec au moins un rouleau entrainé en rotation par un organe moteur.

Avantageusement, la face extérieure de la courroie est en vis-à-vis de la base des maillons lorsque la courroie est engagée dans la chaîne. Encore de préférence, mais non nécessairement, la face extérieure de la courroie vient au contact de la base des maillons lorsque ladite courroie est engagée dans les maillons.

Avantageusement, l'épaisseur de la courroie est supérieure à la hauteur des ailes considérée depuis la base. Aussi, la courroie dépasse hors du volume défini par les ailes des maillons, ce qui permet d'assurer que la courroie vient en contact avec le rail de la teilleuse, empêchant ainsi un contact direct entre les maillons et le rail de la teilleuse susceptible d'endommager les ailes des maillons.

L'invention porte enfin sur une teilleuse comportant :
au moins un dispositif d'entrainement de tiges végétales selon l'invention, et
au moins un système de déplacement pour mettre en mouvement le dispositif d'entrainement,
la teilleuse comportant au moins un rail parallèle à la courroie et sur lequel glisse la face intérieure de la courroie, les tiges étant pincées entre la courroie et les maillons de façon à être déplacées le long du rail.

Ledit au moins un système de déplacement comprend de façon préférentielle un organe moteur et des poulies qui coopèrent avec la sangle d'entrainement. L'organe moteur est agencé pour entrainer en rotation au moins l'une des poulies, afin de déplacer en translation la sangle d'entrainement avec les maillons. Le déplacement des maillons a pour effet de déplacer la courroie lorsqu'elle est engagée et maintenue dans les logements des maillons.

Le rail s'étend selon la direction d'avancée de la courroie, correspondant à la direction longitudinale de la teilleuse.

Sans sortir du cadre de la présente invention, la teilleuse peut comporter plusieurs dispositifs d'entrainement. De préférence, les dispositifs d'entrainement sont décalés transversalement l'un de l'autre, grâce à quoi le dispositif d'entrainement amont pince la tige végétale au niveau d'une première moitié de la tige, ce qui permet de travailler la seconde moitié de la tige, tandis que le dispositif d'entrainement aval pince la tige végétale au niveau de la seconde moitié de la tige, afin de travailler la première moitié de la tige. En fin d'opération, toute la tige est nettoyée et la fibre est intégralement débarrassée des particules de bois.

### Description des dessins

L'invention sera mieux comprise à la lecture de la description qui suit d'un mode de réalisation de l'invention donné à titre d'exemple non limitatif, en référence aux dessins annexés, sur lesquels :
[Fig. **1**] La figure **1** est une vue schématique en vue de côté, d'une partie d'une teilleuse selon l'invention ;
[Fig. **2**] La figure **2** est une vue en perspectif d'un dispositif d'entrainement selon l'invention ;
[Fig. **3**] La figure **3** montre le dispositif d'entrainement de la figure **2**, la courroie étant désengagée des maillons ;
[Fig. **4**] La figure **4** est une vue de face du dispositif d'entrainement de la figure **2** montrant la courroie engagée dans la chaîne ;
[Fig. **5**] La figure **5** illustre la section transversale du dispositif d'entrainement de la figure **2**, montrant la courroie en contact avec le rail de la teilleuse ; et
[Fig. **6**] La figure **6** illustre, en coupe transversale, le dispositif d'entrainement de la figure **2**, la courroie étant désengagée des maillons.

### Description détaillée

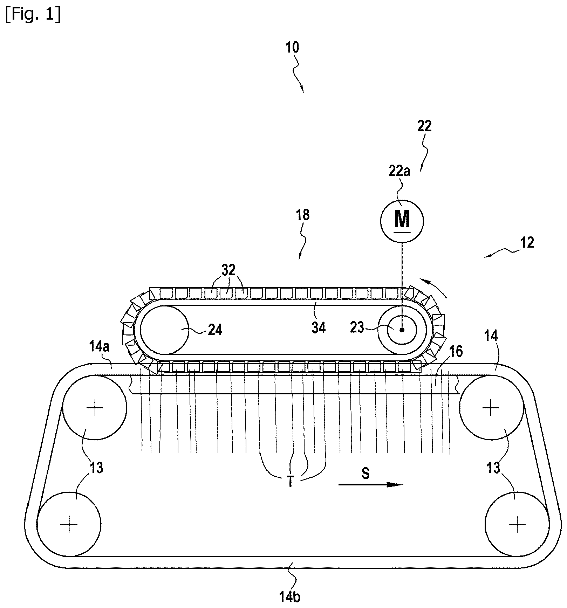

Sur la figure **1**, on a illustré de façon très schématique une teilleuse **10** conforme à la présente invention, et plus particulièrement un système d'entraînement **12** pour déplacer des tiges végétales **T**, par exemple des tiges de lin, selon un sens d'avancée **S** qui est parallèle à la direction longitudinale de la teilleuse **10**.

Considéré selon le sens d'avancée des tiges végétales dans la teilleuse, le système d'entraînement **12** de tiges végétales comporte, dans cet exemple schématique, un dispositif d'entraînement **18** de tiges végétales **T**.

La teilleuse **10** comporte par ailleurs un système de déplacement **22** pour mettre en mouvement le dispositif d'entraînement **18**.

Le système de déplacement **22** comporte un organe moteur **22**a pour entraîner en rotation une poulie d'entraînement **23** coopérant respectivement avec le dispositif d'entraînement **18**. Il est également prévu une poulie menée **24** qui coopère avec la chaine.

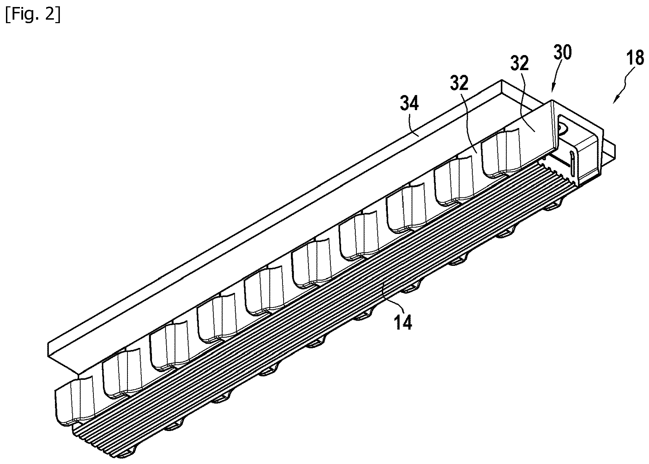

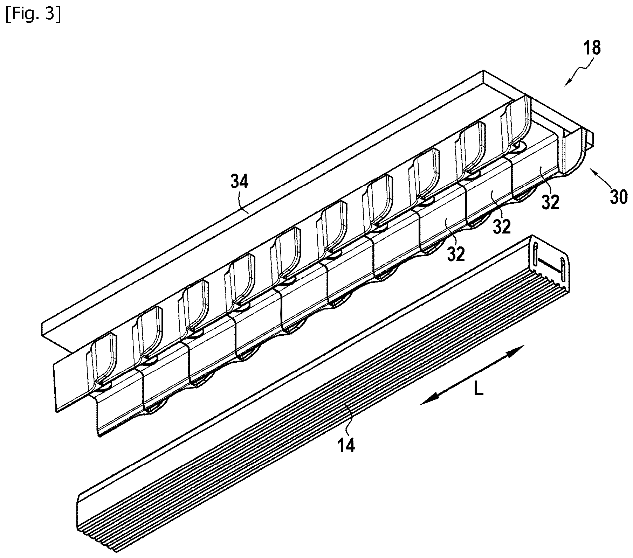

A l'aide des figures **2** et **3**, on va maintenant décrire plus en détail le premier dispositif d'entraînement **18** selon l'invention.

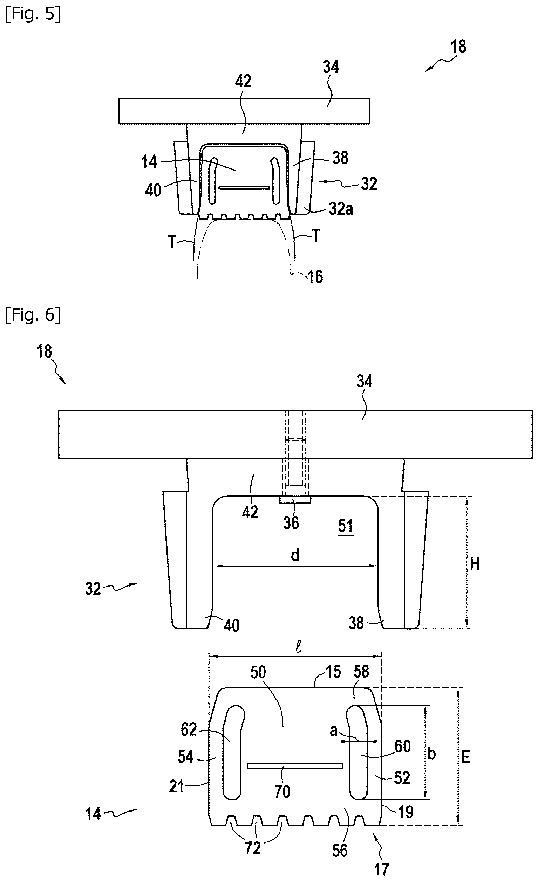

Le dispositif d'entraînement **18** de tiges végétales pour la teilleuse **10** comporte une chaîne **30** qui est constituée d'une succession de maillons **32**, la chaîne **30** est fixée à une sangle d'entraînement **34**, par exemple à l'aide de rivets **36,** illustrés en figure **6**. Les maillons sont préférentiellement réalisés dans un matériau rigide, par exemple en métal.

Comme illustré aux figures **5** et **6**, chaque maillon **32** présente la forme d'un « U » qui comporte deux ailes **38**, **40** sensiblement parallèles l'une à l'autre, chacune des ailes **38**, **40** s'étendant perpendiculairement depuis une base **42** du maillon **32**. Les bases **42** des maillons **32** sont fixées à la sangle d'entraînement **34**.

En se référant aux figures **2** à **4**, on constate que deux maillons **32** consécutifs sont engagés l'un avec l'autre par le fait que les extrémités **32**a de l'un des maillons **32** viennent les extrémités **32**b des ailes du maillon suivant.

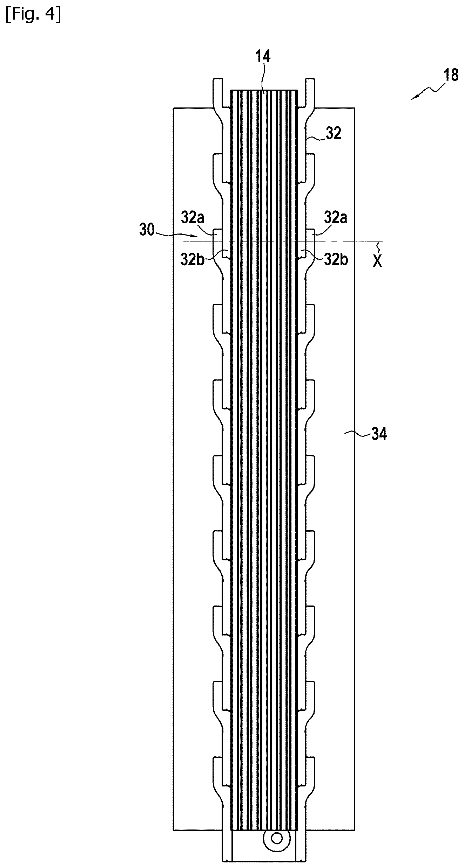

Cette conformation permet d'assurer une continuité entre les maillons successifs, tout en autorisant un pivotement relatif entre deux maillons successifs selon un axe de pivotement **X** symbolisé en figure **4**. Cet axe de pivotement **X** est perpendiculaire aux ailes des maillons.

Le dispositif d'entrainement **18** comporte en outre une courroie **14**, dans cet exemple en caoutchouc, qui est conformée pour coopérer avec les maillons **32** de la chaîne du dispositif d'entrainement **18**. La courroie **14** coopère avec des rouleaux **13**. Le brin actif **14**a de la courroie **14** s'engage avec la chaine **30**, tandis que le brin retour **14**b passe, de façon connue, en dessous du rail **16**.

La courroie **14** peut être engagée ou désengagée dans les maillons. Lorsque la courroie **14** est en prise avec les maillons, ces derniers enserrent la courroie et la maintiennent de façon à la déplacer selon le sens de déplacement **S**. Pour ce faire, chacun des maillons **32** comporte un logement **51**, qui est défini entre la base **42** et les deux ailes parallèles **38**, **40**. Ce logement **51** est destiné à recevoir la courroie **14**. Autrement dit, la courroie **14** est logée de façon amovible dans les logements **50** des maillons **32**. En amont du dispositif d'entrainement, les tiges végétales viennent s'engager entre les maillons et la courroie **14**. Les tiges végétales **T** étant alors pincées entre la courroie **14** et les maillons, on comprend que la mise en mouvement des dispositifs d'entrainement a pour effet de déplacer la courroie ensemble avec les tiges végétales **T** selon le sens de déplacement **S**.

A l'aide des figures **2** à **6**, on va maintenant décrire plus en détail la courroie **14** selon l'invention. Comme expliqué ci-dessus, la courroie **14** est agencée pour venir s'insérer dans les logements, c'est-à-dire entre les ailes **38**, **40** des maillons **32** de la chaîne **30**. La courroie présente en outre une largeur ℓ qui est définie entre des premier et second flancs **19**, **21** de la courroie **14**.

Par ailleurs, la courroie **14** présente une direction longitudinale **L**, une épaisseur **E** définie entre une face extérieure **15** et une face intérieure **17** de ladite courroie. Comme on le comprend à l'aide de la figure **5**, les premier et deuxième flancs **19**, **21** de la courroie **14** sont destinés à venir en appui contre les ailes **38**, **40** des maillons **32** lorsque la courroie **14** est engagée dans la chaîne **30**. Conformément à l'invention, la courroie **14** présente une élasticité selon sa largeur. Lorsque la courroie **14** est désengagée de la chaîne **30**, la largeur ℓ est sensiblement égale ou légèrement supérieure à la distance d séparant les première et deuxième ailes **38**, **40** du maillon **32**.

Conformément à l'invention, considérée en coupe transversale, la courroie **14** comprend une portion centrale **50**, ainsi qu'une première portion latérale **52** et une deuxième portion latérale **54** opposée à la première portion latérale **52**. La première portion latérale **52**, de même que la deuxième portion latérale **54**, est élastiquement mobile par rapport à la portion centrale **50** dans le sens de la largeur ℓ de la courroie **14**, ce qui a pour effet de faciliter l'engagement de la courroie **14** dans les maillons. En effet, grâce à l'élasticité de la courroie selon sa largeur, on comprend que lors de l'engagement de la courroie dans la chaîne **30**, la largeur ℓ de la courroie **14** diminue légèrement pour se conformer à la distance séparant ailes rigides du maillon métallique **32**.

Dans cet exemple de réalisation non limitatif la courroie comprend une première cavité longitudinale **60** qui est ménagée entre la première portion latérale **52** et la portion centrale **50**. La première cavité longitudinale **60** s'étend selon la direction longitudinale de la courroie. Considérée selon la section transversale de la courroie, la première cavité longitudinale **60** présente une section transversale de forme oblongue dont la largeur **a** s'étend selon la largeur ℓ de la courroie. La première cavité longitudinale présente une longueur **b** qui s'étend entre la face extérieure **15** et la face intérieure **17** de la courroie. Dans cet exemple, la première cavité longitudinale **60** est vide. La courroie peut donc être légèrement écrasée sur elle-même selon sa largeur, la première portion latérale **52** venant alors en appui contre la portion centrale **50**. La première portion latérale **52** est reliée à la portion centrale **50** par une première portion de liaison **56** située entre la première cavité longitudinale **60** et la face intérieure **17** d'une part, et par une deuxième portion de liaison **58** qui est située entre la première cavité longitudinale **60** et la face extérieure **15**. Ces deux portions de liaison, réalisées en caoutchouc, présentent une élasticité qui tend à ramener la première portion latérale dans sa position initiale lorsque la courroie est désengagée de la chaîne.

Comme on le constate dans l'exemple de la figure **6**, la longueur **b** de la première cavité longitudinale **60** est supérieure à la moitié de l'épaisseur **E** de la courroie.

Dans cet exemple, on constate que la courroie comporte une seconde cavité longitudinale **62** qui est parallèle et, dans cet exemple symétrique, à la première cavité longitudinale **60**. La seconde cavité longitudinale **62** s'étend selon la longueur de la courroie et est ménagée entre la seconde portion latérale **52** et la portion centrale **50**.

Les cavités **60,62** sont entièrement logées dans la courroie **14**. Autrement dit, considérées en section transversale prise dans un plan perpendiculaire à la direction longitudinale de la courroie, les première et seconde cavités sont entourées de la matière constitutive de la courroie, en l'espèce du caoutchouc.

En revenant à la figure **5**, on constate que lors de l'engagement de la courroie **14** dans le logement **51**, les premier et second flancs **19**, **21** de la courroie viennent et restent en appui contre les ailes **38**, **40** du maillon **32**.

Dans cet exemple, la compression transversale possible est de l'ordre de la somme des largeurs des première et seconde cavités longitudinales.

Par ailleurs, pour améliorer la résistance à la traction de la courroie, la portion centrale **50** comporte en outre une armature **70** qui est longitudinale. Dans cet exemple, cette armature **70** se présente sous la forme d'une bande plate métallique qui est parallèle aux faces extérieure et intérieure **15**, **17** de la courroie. De préférence, l'armature présente des protubérances latérales permettant d'améliorer l'adhérence avec le caoutchouc, et par voie de conséquence, réduire le risque que l'armature ne glisse par rapport au caoutchouc.

En se référant à nouveau à la figure **6**, on conçoit que les première et seconde cavités **60**, **62** sont disposées de part et d'autre de l'armature **70**.

De façon connue par ailleurs, la teilleuse **10** comporte un rail **16** qui s'étend selon la direction longitudinale de la teilleuse **10**, parallèlement au sens de déplacement **S**.

Comme on le constate sur la figure **1**, la courroie **14** s'étend entre le rail **16** et le dispositif d'entraînement **18**.

La courroie **14** est agencée pour glisser sur le rail **16**. La face intérieure **17** repose sur le rail **16**.

Pour limiter le frottement entre la courroie **14** et le rail **16**, la face intérieure **17** de la courroie est munie de rainures **72** longitudinales. Les rainures permettent ainsi de réduire le coefficient de frottement entre la courroie et le rail **16**.

On comprend par ailleurs que l'épaisseur **E** de la courroie **30** est supérieure à la hauteur **H** des ailes **38**, **40**, cette hauteur étant définie entre la base **42** et le sommet des ailes **38**, **40**. Comme expliqué ci-dessus, et comme illustré en figure **5**, ceci permet d'assurer que la face intérieure **17** de la courroie **30** vient en appui contre le rail **16** sans que les ailes des maillons ne touchent le rail.

Par ailleurs, la face extérieure **15** de la courroie **30** est en vis-à-vis de la base des maillons lorsque la courroie est engagée dans la chaîne. De préférence, mais pas nécessairement, la face extérieure **15** vient en appui contre la base des maillons.

Enfin, sur la figure **5**, on a illustré une tige végétale **T** qui est pincée entre la courroie **14** et le maillon **32** de la chaîne **30**.

## Revendications

1. Courroie (14) pour dispositif d'entrainement (18) de tiges végétales (7) muni d'une chaine (30) de maillons (32) en forme de U, dans laquelle la courroie est agencée pour venir se loger entre des ailes (38,40) des maillons, la courroie présentant une direction longitudinale (L), une épaisseur (E) définie entre une face extérieure (15) et une face intérieure (17) de la courroie, et une largeur (I) définie entre des premier et second flancs (19,21) de la courroie destinés à venir en appui contre les ailes, la courroie ayant une portion centrale (50) ainsi qu'au moins une première portion latérale reliée à la portion centrale, **caractérisée en ce que** ladite courroie comprend au moins une première cavité longitudinale (60) ménagée entre la première portion latérale (52) et la portion centrale (50) et s'étendant selon la direction longitudinale de la courroie, de sorte que ladite première portion latérale (52) est élastiquement mobile par rapport à la portion centrale (50) dans le sens de la largeur (I) de la courroie (14) de façon à faciliter l'engagement de la courroie (14) dans les maillons, et **en ce que**, considérée selon une section transversale de la courroie, la première cavité longitudinale (60) présente une section transversale de forme oblongue dont la largeur s'étend selon la largeur de la courroie, et **en ce que** la longueur de la section transversale de la première cavité de forme oblongue s'étend selon la hauteur de la courroie.

2. Courroie selon la revendication 1, comprenant en outre une seconde portion latérale (54) reliée à la portion centrale (50) ainsi qu'une seconde cavité longitudinale (62), parallèle à la première cavité longitudinale (60), ladite seconde cavité longitudinale (62) s'étendant selon la longueur de la courroie et étant ménagée entre la seconde portion latérale et la portion centrale.

3. Courroie selon l'une quelconque des revendications précédentes, dans laquelle la portion centrale (50) comporte en outre une armature (70) longitudinale, de préférence en métal.

4. Courroie selon les revendications 2 et 3, dans laquelle les première et seconde cavités (60,62) sont disposées de part et d'autre de l'armature (70).

5. Courroie selon l'une quelconque des revendications précédentes, dans laquelle la face intérieure (17) de la courroie est munie de rainures (72) longitudinales.

6. Courroie (14) selon l'une quelconque des revendications précédentes, **caractérisée en ce qu'**elle est réalisée en caoutchouc.

7. Courroie (14) selon l'une quelconque des revendications précédentes, **caractérisée en ce que** la longueur de la section transversale de la première cavité (60) est supérieure à la moitié de la hauteur de la courroie, de préférence supérieure aux deux tiers de la hauteur de la courroie.

8. Courroie (14) selon l'une quelconque des revendications précédentes, **caractérisée en ce que** la première cavité (60) est vide ou bien comprend un matériau plus souple que le matériau constitutif de la portion centrale (50).

9. Dispositif d'entrainement (18) de tiges végétales (T) pour teilleuse (10) comportant une chaîne (30) ayant :
des maillons (32) en forme de U comportant chacun un logement (50) défini entre une base (42) et deux ailes parallèles (38) du maillon ;
une sangle d'entrainement (34) à laquelle sont fixés les maillons (32) ; le dispositif d'entrainement comportant en outre :
une courroie (14) selon l'une quelconque des revendications précédentes, la courroie étant logée de façon amovible dans les logements (50) des maillons (32) de sorte que les premier et second flancs de la courroie viennent en appui contre les ailes des maillons.

10. Dispositif d'entrainement de tiges végétales selon la revendication 9, dans lequel la face extérieure (15) de la courroie est en vis-à-vis de la base des maillons lorsque la courroie est engagée dans la chaîne.

11. Dispositif d'entrainement selon la revendication 9 ou 10, dans laquelle l'épaisseur (E) de la courroie (30) est supérieure à la hauteur (H) des ailes.

12. Teilleuse (10) comportant :
au moins un dispositif d'entrainement (18) de tiges végétales (T) selon les revendications 9 à 11, et
un système de déplacement (22) pour mettre en mouvement le dispositif d'entrainement,
la teilleuse comportant au moins un rail (16) parallèle à la courroie et sur lequel glisse la face intérieure de la courroie, les tiges (T) étant pincées entre la courroie (16) et les maillons de façon à être déplacées le long du rail.

## Patentansprüche

1. Riemen (14) für eine Antriebsvorrichtung (18) von Pflanzenstängeln (7), die mit einer Kette (30) aus U-förmigen Gliedern (32) versehen ist, wobei der Riemen angeordnet ist, um zwischen Flügeln (38, 40) der Glieder aufgenommen zu werden, wobei der Riemen eine Längsrichtung (L), eine Dicke (E), die zwischen einer Außenseite (15) und einer Innenseite (17) des Riemens definiert ist, und eine Breite (I), die zwischen einer ersten und einer zweiten Flanke (19, 21) des Riemens definiert ist, die dazu bestimmt sind, an den Flügeln in Anlage zu kommen, aufweist, wobei der Riemen einen mittleren Abschnitt (50) sowie mindestens einen ersten seitlichen Abschnitt, der mit dem mittleren Abschnitt verbunden ist, aufweist, **dadurch gekennzeichnet, dass** der Riemen mindestens einen ersten Längshohlraum (60) umfasst, der zwischen dem ersten seitlichen Abschnitt (52) und dem mittleren Abschnitt (50) ausgebildet ist und sich in der Längsrichtung des Riemens erstreckt, sodass der erste seitlichen Abschnitt (52) in Bezug auf den mittleren Abschnitt (50) in Richtung der Breite (I) des Riemens (14) elastisch beweglich ist, um den Eingriff des Riemens (14) in die Glieder zu ermöglichen, und dass der erste Längshohlraum (60), betrachtet in einem Querschnitt des Riemens, einen länglichen Querschnitt aufweist, dessen Breite sich entlang der Breite des Riemens erstreckt, und dass sich die Länge des Querschnitts des ersten länglichen Hohlraums entlang der Höhe des Riemens erstreckt.

2. Riemen nach Anspruch 1, ferner umfassend einen zweiten seitlichen Abschnitt (54), der mit dem mittleren Abschnitt (50) verbunden ist, sowie einen zweiten Längshohlraum (62) parallel zu dem ersten Längshohlraum (60), wobei sich der zweite Längshohlraum (62) entlang der Länge des Riemens erstreckt und zwischen dem zweiten seitlichen Abschnitt und dem mittleren Abschnitt ausgebildet ist.

3. Riemen nach einem der vorherigen Ansprüche, wobei der mittlere Abschnitt (50) ferner eine Längsarmierung (70), vorzugsweise aus Metall, umfasst.

4. Riemen nach Anspruch 2 und 3, wobei der erste und der zweite Hohlraum (60, 62) auf beiden Seiten der Armierung (70) angeordnet sind.

5. Riemen nach einem der vorherigen Ansprüche, wobei die Innenseite (17) des Riemens mit Längsrillen (72) versehen ist.

6. Riemen (14) nach einem der vorherigen Ansprüche, **dadurch gekennzeichnet, dass** er aus Gummi gefertigt ist.

7. Riemen (14) nach einem der vorherigen Ansprüche, **dadurch gekennzeichnet, dass** die Länge des Querschnitts des ersten Hohlraums (60) größer als die Hälfte der Höhe des Riemens, vorzugsweise größer als zwei Drittel der Höhe des Riemens, ist.

8. Riemen (14) nach einem der vorherigen Ansprüche, **dadurch gekennzeichnet, dass** der erste Hohlraum (60) leer ist oder ein Material umfasst, das weicher ist als das Material, aus dem der mittlere Abschnitt (50) besteht.

9. Antriebsvorrichtung (18) von Pflanzenstängeln (T) für eine Brech- und Schwingmaschine (10), umfassend eine Kette (30), die Folgendes aufweist:
U-förmige Glieder (32), die jeweils eine Aufnahme (50) umfassen, die zwischen einer Basis (42) und zwei parallelen Flügeln (38) des Glieds definiert ist;
einen Antriebsgurt (34), an dem die Glieder (32) befestigt sind; die Antriebsvorrichtung ferner umfassend:
einen Riemen (14) nach einem der vorherigen Ansprüche, wobei der Riemen lösbar in den Aufnahmen (50) der Glieder (32) aufgenommen ist, sodass die erste und die zweite Flanke des Riemens an den Flügeln der Glieder zur Anlage kommen.

10. Antriebsvorrichtung von Pflanzenstängeln nach Anspruch 9, wobei die Außenseite (15) des Riemens gegenüber der Basis der Glieder ist, wenn der Riemen in die Kette eingreift.

11. Antriebsvorrichtung nach Anspruch 9 oder 10, wobei die Dicke (E) des Riemens (30) größer ist als die Höhe (H) der Flügel.

12. Brech- und Schwingmaschine (10), umfassend:
mindestens eine Antriebsvorrichtung (18) von Pflanzenstängeln (T) nach den Ansprüchen 9 bis 11, und
ein Bewegungssystem (22), um die Antriebsvorrichtung in Bewegung zu setzen,
die Brech- und Schwingmaschine umfassend mindestens eine Schiene (16) parallel zu dem Riemen und auf der die Innenseite des Riemens gleitet, wobei die Stängel (T) zwischen dem Riemen (16) und den Gliedern eingeklemmt werden, um entlang der Schiene bewegt zu werden.

## Claims

1. A belt (14) for a feeding device (18) for plant stems (7) equipped with a chain (30) of U-shaped links (32), wherein the belt is arranged to fit between wings (38, 40) of the links, the belt having a longitudinal direction (L), a thickness (E) defined between an outer face (15) and an inner face (17) of the belt, and a width (I) defined between first and second flanks (19, 21) of the belt intended to rest against the wings, the belt having a central portion (50) as well as at least one first lateral portion connected to the central portion, **characterized in that** said belt comprises at least one first longitudinal cavity (60) arranged between the first lateral portion (52) and the central portion (50) and extending along the longitudinal direction of the belt, so that said first lateral portion (52) is elastically movable relative to the central portion (50) in the direction (I) of the width of the belt (14) to facilitate the engagement of the belt (14) in the links, and **in that**, considered in a transverse section of the belt, the first longitudinal cavity (60) has an oblong-shaped transverse section, the width of which extends along the width of the belt, and **in that** the length of the transverse section of the first oblong-shaped cavity extends along the height of the belt.

2. The belt according to claim 1, further comprises a second lateral portion (54) connected to the central portion (50) as well as a second longitudinal cavity (62), parallel to the first longitudinal cavity (60), said second longitudinal cavity (62) extending along the length of the belt and being arranged between the second lateral portion and the central portion.

3. The belt according to any of the preceding claims, wherein the central portion (50) further comprises a longitudinal reinforcement (70), preferably made of metal.

4. The belt according to claims 2 and 3, wherein the first and second cavities (60, 62) are arranged on either side of the reinforcement (70).

5. The belt according to any of the preceding claims, wherein the inner face (17) of the belt is provided with longitudinal grooves (72).

6. The belt (14) according to any of the preceding claims, **characterized in that** the belt is made of rubber.

7. The belt (14) according to any of the preceding claims, **characterized in that** the length of the transverse section of the first cavity (60) is greater than half the height of the belt, preferably greater than two-thirds of the height of the belt.

8. The belt (14) according to any of the preceding claims, **characterized in that** the first cavity (60) is empty or comprises a material more flexible than the material constituting the central portion (50).

9. A feeding device (18) for plant stems (T) for a scutcher (10) comprising a chain (30) having:
U-shaped links (32) each having a housing (50) defined between a base (42) and two parallel wings (38) of the link;
a feeding belt (34) to which the links (32) are attached; the feeding device further comprising:
a belt (14) according to any of the preceding claims, the belt being removably housed in the housings (50) of the links (32) so that the first and second flanks of the belt come to rest against the wings of the links.

10. The feeding device for plant stems according to claim 9, wherein the outer face (15) of the belt is opposite the base of the links when the belt is engaged in the chain.

11. The feeding device according to claim 9 or 10, wherein the thickness (E) of the belt (30) is greater than the height (H) of the wings.

12. A Scutcher (10) comprising:
at least one feeding device (18) of plant stems (T) according to claims 9 to 11, and
a displacement system (22) to move the feeding device,
the scutcher comprising at least one rail (16) parallel to the belt and on which the inner face of the belt slides, the stems (T) being pinched between the belt (16) and the links to be moved along the rail.
